# EUROPÄISCHE PATENTANMELDUNG

(11) **EP 3 733 327 A1**
(43) Veröffentlichungstag der Anmeldung: **04.11.2020**
(21) Anmeldenummer: 20172131.3
(22) Anmeldetag: 29.04.2020
(51) Int. Cl.: B22F 3/105, B22F 7/08, B23K 26/342, C23C 24/04, F01D 5/28

(54) **VERFAHREN ZUR HERSTELLUNG EINES METALL-KUNSTSTOFF-VERBUNDES SOWIE METALLBESCHICHTETES KUNSTSTOFFBAUTEIL**

(30) Priorität: 30.04.2019 DE 102019206200
(71) Anmelder: FRAUNHOFER-GESELLSCHAFT zur Förderung der angewandten Forschung e.V., 80686 München (DE); access e.V., 52072 Aachen (DE)
(72) Erfinder: RITTINGHAUS, Silja-Katharina, 52074 Aachen (DE); MATHES, Michael, 52072 Aachen (DE); WEISHEIT, Andreas, 52074 Aachen (DE)
(74) Vertreter: Pfenning, Meinig & Partner mbB

(57) **Zusammenfassung**

Die vorliegende Erfindung betrifft ein Verfahren zur direkten Herstellung eines Metall-Kunststoff-Verbundes, bei dem eine Metallschicht unmittelbar auf einem Kunststoffbauteil oder mittelbar über eine Kopplungsschicht auf einem Kunststoffbauteil erzeugt wird. Des Weiteren betrifft die vorliegende Erfindung entsprechend hergestellte metallbeschichtete Kunststoffbauteile.

## Beschreibung

Die vorliegende Erfindung betrifft ein Verfahren zur direkten Herstellung eines Metall-Kunststoff-Verbundes, bei dem eine Metallschicht unmittelbar auf einem Kunststoffbauteil oder mittelbar über eine Kopplungsschicht auf einem Kunststoffbauteil erzeugt wird. Des Weiteren betrifft die vorliegende Erfindung entsprechend hergestellte metallbeschichtete Kunststoffbauteile.

Kunststoffmetallverbunde, nachfolgend KMV genannt, sind eine gängige Methode bei der Fertigung von Bauteilen. Die jeweiligen Vorteile der beiden Werkstoffklassen, Metall und Kunststoff, werden dabei in einem Bauteil zusammengeführt. Beispiele sind Gewindeeinsätze in Kunststoffgehäusen, lasttragende Metallstrukturen, Automobilstoßstangen aus Kunststoff oder vor Abrasion schützende Metallschichten.

Häufig wird auf einem Kunststoffteil eine Metallschicht benötigt. Diese kann sowohl dekorative, konstruktive (z. B. Verbundfestigkeit) oder funktionale Zwecke (z. B. Verschleißschutz) haben. Besonders im Falle der konstruktiven und funktionalen Kombination Kunststoff/Metall sind in der Regel Schichtdicken größer 100 µm und/oder auch dreidimensionale Metallstrukturen erforderlich. Diese können nicht oder nur unwirtschaftlich durch Dünnschichtverfahren wie galvanisches Beschichten oder PVD aufgebracht werden.

Gemeinhin werden solche Metallstrukturen separat hergestellt und nachfolgend in den erforderlichen Bereichen mit dem Kunststoffteil verbunden. Zur Herstellung der KVM wird also üblicherweise ein Kunststoffteil hergestellt, auf das folgend ein separat hergestelltes Metallteil mittels geeigneter Fügetechnik (z. B. Kleben) aufgebracht wird.

Hintergrund der Erfindung ist die Herstellung der Metallschicht/Metallstruktur direkt auf dem Kunststoffteil mittels eines additiven Fertigungsverfahrens durchzuführen. Dabei kann auch mit einem geeigneten Verfahren auf dreidimensionalen Strukturen eine Schicht oder ebenfalls dreidimensionale Metallstruktur aufgebracht werden.

Ein Beispiel aus der Industrie für einen Metall/Kunststoffverbund sind Fanschaufeln aus CFRP mit Metallbelägen auf der Leading Edge (Metal Leading Edge - MLE). MLE in Verbindung mit Kunststoff-Fanschaufeln sind besonders effektiv, da sie den Einsatz von gewichtssparenden CFRP-Schaufeln in Flug-Turbinenfans überhaupt erst ermöglichen. Ein Einsatz der Kunststoff-Fanschaufel ohne eine MLE würde zu raschem Verschleiß führen. Kurze Wartungs- und Reparaturzyklen wären die Folgen.

Nach dem Stand der Technik werden die Metallbeläge heute aus Blechen (z. B. Titan oder Stahlbasis) gefertigt und aufgeklebt. Öffentlich zugängliche Fachliteratur sowie Datenblätter diverser Luftfahrthersteller und Zulieferer enthalten Angaben zu Herstellung, Struktur und Material der oben genannten MLE. Ebenso existieren zahlreiche Berichte über den praktischen Einsatz. Sie dokumentieren u. a. den Nachweis des Nutzens. Nach heutigem Stand der Wissenschaft und Technik ist im Bereich der MLE kein Verfahren bekannt, welches eine direkte Herstellung der MLE auf dem Kunststoffteil beschreibt oder diesbezügliche Ansprüche erhebt.

Nach heutigem Stand der Technik ist kein Verfahren für die direkte Herstellung einer Metallschicht über die schmelzmetallurgische direkt auf einem Kunststoff bekannt. Bisher werden lediglich dünne Schichten über ein zweistufiges Verfahren (Drucken + Funktionalisieren) beschrieben.

Ausgehend hiervon war es Aufgabe der vorliegenden Erfindung, alternative Verfahren für die kommerzielle Fertigung von Kunststoff-Metallverbunden herzustellen, wobei auf einen Klebevorgang verzichtet werden kann.

Diese Aufgabe wird hinsichtlich eines Verfahrens mit den Merkmalen des Patentanspruchs 1 sowie hinsichtlich eines Kunststoffbauteils mit den Merkmalen des Patentanspruchs 14 gelöst. Die jeweiligen abhängigen Patentansprüche stellen dabei vorteilhafte Weiterbildungen dar.

In einem ersten Aspekt betrifft die vorliegende Erfindung ein Verfahren zur Herstellung eines Metall-Kunststoff-Verbundes, bei dem zumindest bereichsweise auf eine Oberfläche eines Kunststoffbauteils
eine Pulverschicht, umfassend oder bestehend aus mindestens einem Metallpulver oder einem Pulver einer Metalllegierung, aufgebracht und anschließend die Pulverschicht durch einen schmelzmetallurgischen oder sintermetallurgischen Schritt zu einer unmittelbar mit der Oberfläche des Kunststoffbauteils verbundenen Metallschicht verarbeitet wird, oder
ein Pulverstrahl, umfassend oder bestehend aus mindestens einem Metallpulver oder einem Pulver einer Metalllegierung in den Fokus einer auf die Oberfläche des Kunststoffbauteils fokussierten Wärmequelle eingetragen wird, wobei eine unmittelbar mit der Oberfläche des Kunststoffbauteils verbundenen Metallschicht erzeugt wird.

Bei dem erfindungsgemäßen Verfahren wird unmittelbar auf die Oberfläche eines Kunststoffbauteils, das aus einem thermoplastischen Kunststoff gebildet ist, eine Metallschicht erzeugt.

Alternativ ist es ebenso möglich, einen mittelbaren Verbund zwischen Kunststoffbauteile und Metallschicht zu erzeugen. Hierbei wird die Metallschicht über eine sog. Kopplungsschicht, die zuvor auf das thermoplastische Kunststoffbauteil aufgebracht wird, erzeugt. Gemäß einem zweiten Aspekt betrifft die vorliegende Erfindung somit Verfahren zur Herstellung eines Metall-Kunststoff-Verbundes, bei dem zumindest bereichsweise auf eine Oberfläche eines Kunststoffbauteils
eine Pulverschicht, umfassend oder bestehend aus mindestens einem Metallpulver oder einem Pulver einer Metalllegierung, aufgebracht und anschließend die Pulverschicht durch einen schmelzmetallurgischen oder sintermetallurgischen Schritt zu einer mittelbar mit der Oberfläche des Kunststoffbauteils verbundenen Metallschicht verarbeitet wird, oder
ein Pulverstrahl, umfassend oder bestehend aus mindestens einem Metallpulver oder einem Pulver einer Metalllegierung in den Fokus einer auf die Oberfläche des Kunststoffbauteils fokussierten Wärmequelle eingetragen wird, wobei eine mittelbar mit der Oberfläche des Kunststoffbauteils verbundenen Metallschicht erzeugt wird, oder
ein Pulverstrahl, umfassend oder bestehend aus mindestens einem Metallpulver oder einem Pulver einer Metalllegierung, beschleunigt und auf die Oberfläche des Kunststoffbauteils aufgetragen wird, so dass beim Auftreffen des Pulverstrahls eine mit der Oberfläche des Kunststoffbauteils verbundene Metallschicht erzeugt wird.

Der Begriff "Metallschicht" ist hierbei im weiteren Sinne zu verstehen. Unter eine Metallschicht fallen erfindungsgemäß beispielsweise Metallstrukturen, insbesondere beispielsweise nicht-poröse bzw. geschlossene oder poröse Metallstrukturen.

Eine bevorzugte Ausführungsform sieht vor, dass der schmelzmetallurgischen Schritt ausgewählt ist aus der Gruppe bestehend aus Electron Beam Melting (EBM), Laser Powder Bed Fusion (LPBF) und Plasmaschweißen, oder
das Erzeugen der Metallschicht mittels Direct Energy Deposition (DED), z.B. mittels Laser Metal Deposition (LMD) durchgeführt wird, oder
das Erzeugen der Metallschicht mittels Cold Jetting durchgeführt wird.

Für den Fall, dass die Metallschicht mittels der Kopplungsschicht aufgebracht wird, ist es bevorzugt, wenn die Oberfläche des Kunststoffbauteils zumindest in dem Bereich, in dem die Pulverschicht aufgebracht wird, eine Kopplungsschicht aus einem Kunststoff aufweist oder
vor Aufbringen der Pulverschicht auf der Oberfläche des Kunststoffbauteils zumindest in dem Bereich, in dem die Pulverschicht aufgebracht wird, eine Kopplungsschicht aus einem Kunststoff aufgebracht wird.

Beispielsweise kann der Kunststoff der Kopplungsschicht ausgewählt sein aus thermoplastischen Kunststoffen, bevorzugt semikristallinen oder amorphen thermoplastischen Kunststoffen, insbesondere semikristallinen oder amorphen Polyetherketonen (PEK), z.B. Polyetheretherketon (PEEK); Polyalkylenen, z.B. Polyethylen (PE) oder Polypropylen (PP); Polyamiden (PA); Polyacetalen, z.B. Polyoxymethylen (POM); Polyacrylathen, z.B. Polymethyl(meth)acrylat (PMMA); Polyphenylensulfid (PPS); Polycarbonaten (PC); Polyestern, z.B. Polyethylenterephthalat (PET); Polyphthalamiden (PPA); Acrylnitril-Butadien-Styrol-Copolymeren (ABS); Polyvinylchlorid (PVC); Polyamidimide (PAI); Polysulfonen (PSU); Polyethersulfonen (PES) sowie Mischungen und Kombinationen hiervon.

Zudem ist es möglich, dass die Kopplungsschicht Metallpartikel und/oder Metallfasern, die im Kunststoff der Kopplungsschicht eingebettet sind, beinhaltet.

Insbesondere für den Fall, dass das Metall der Metallpartikel und/oder der Metallfasern aus dem gleichen Metall oder der gleichen Metalllegierung wie das Metall bzw. die Metalllegierung der Pulverschicht oder unterschiedlichen Metallen oder Metalllegierungen wie das Metall bzw. die Metalllegierung der Pulverschicht ist, kann der Verbund zwischen Metall und Kopplungsschicht deutlich verstärkt werden, da dann bereits ein unmittelbarer Verbund zwischen den Metallen, die in der Kopplungsschicht vorliegen, entstehen kann.

Die Kopplungsschicht kann beispielsweise mittels eines Spritzverfahrens, z.B. mittels Pulverspritzens oder thermischen Spritzens aufgetragen werden, bei dem ein Pulver des Kunststoffs der Kopplungsschicht ggf. zusammen mit den Metallpartikel und/oder Metallfasern auf die Oberfläche des Kunststoffbauteils aufgesprüht wird.

Für den Fall, dass die Metallschicht unmittelbar mit dem Kunststoffbauteil verbunden wird, ist das Kunststoffbauteil bevorzugt ein thermoplastischer Kunststoff und insbesondere ausgewählt aus der Gruppe bestehend aus thermoplastischen Kunststoffen, bevorzugt semikristallinen oder amorphen thermoplastischen Kunststoffen, insbesondere semikristallinen oder amorphen Polyetherketonen (PEK), z.B. Polyetheretherketon (PEEK); Polyalkylenen, z.B. Polyethylen (PE) oder Polypropylen (PP); Polyamiden (PA); Polyacetalen, z.B. Polyoxymethylen (POM); Polyacrylathen, z.B. Polymethyl(meth)acrylat (PMMA); Polyphenylensulfid (PPS); Polycarbonaten (PC); Polyestern, z.B. Polyethylenterephthalat (PET); Polyphthalamiden (PPA); Acrylnitril-Butadien-Styrol-Copolymeren (ABS); Polyvinylchlorid (PVC); Polyamidimide (PAI); Polysulfonen (PSU); Polyethersulfonen (PES) sowie Mischungen und Kombinationen hiervon.

Für den Fall des mittelbaren Verbundes zwischen Metallschicht und Kunststoffbauteil ist der Kunststoff des Kunststoffbauteils beispielsweise ausgewählt aus den zuvor genannten thermoplastischen Kunststoffen. Ebenso ist es jedoch möglich, dass das Kunststoffbauteil aus Duroplaten, insbesondere Formaldehydharzen, Epoxidharzen, Phenolharzen, Acrylatharzen sowie Polyurethanen und Silikonharzen gebildet ist. Die Kopplungsschicht ermöglicht somit das Erzeugen eines Metall-Kunststoffverbundes auf Kunststoffbauteilen, die aus Materialien bestehen, die ansonsten nicht direkt mit Metallen beschichtbar sind.

Für den Fall, dass die Erzeugung der Metallschicht mittels einer Pulverschicht erfolgt, kann diese neben dem mindestens einen Metallpulver oder dem Pulver einer Metalllegierung ein Kunststoffpulver und/oder Metallfasern umfassen.

Weiter bevorzugt ist das Metall ausgewählt aus der Gruppe bestehend aus Übergangsmetallen der 3. Periode des Periodensystems, insbesondere Titan, oder Hauptgruppenmetallen, insbesondere Magnesium oder Aluminium, und die Metalllegierungen ausgewählt sind aus der Gruppe bestehend aus Legierungen von Übergangsmetallen der 3. Periode des Periodensystems, insbesondere Titanlegierungen, Stähle, Eisenlegierungen oder High-Entropy-Alloys, oder Legierungen von Hauptgruppenmetallen, insbesondere Magnesiumlegierungen oder Aluminiumlegierungen.

Der Schritt des Erzeugens der Metallschicht kann wiederholt werden. Hierbei kann beispielsweise nach Herstellen der unmittelbar oder mittelbar mit der Oberfläche des Kunststoffbauteils verbundenen Metallschicht mindestens ein weiteres Mal, z.B. 1 bis 1.000.000 Mal, bevorzugt 20 bis 10.000 Mal,
eine Pulverschicht mindestens eines Metalls oder einer Metalllegierung aufgebracht und anschließend ein schmelzmetallurgischen Schritt durchgeführt werden, oder
ein Pulverstrahl, umfassend oder bestehend aus mindestens einem Metallpulver oder einem Pulver einer Metalllegierung in den Fokus einer auf die Oberfläche der Metallschicht fokussierten Wärmequelle eingetragen werden, oder
ein Pulverstrahl, umfassend oder bestehend aus mindestens einem Metallpulver oder einem Pulver einer Metalllegierung, beschleunigt und auf die Oberfläche des Kunststoffbauteils aufgetragen werden,
wobei jeweils eine Verdickung der Metallschicht stattfindet.

Für den Fall, dass eine Wiederholung des Erzeugens der Metallschicht erfolgt, kann dieses beispielsweise derart durchgeführt werden, dass stets das gleiche Verfahren (d.h. eine Pulverschicht mindestens eines Metalls oder einer Metalllegierung aufgebracht und anschließend ein schmelzmetallurgischen Schritt durchgeführt wird, oder ein Pulverstrahl, umfassend oder bestehend aus mindestens einem Metallpulver oder einem Pulver einer Metalllegierung in den Fokus einer auf die Oberfläche der Metallschicht fokussierten Wärmequelle eingetragen wird, oder ein Pulverstrahl, umfassend oder bestehend aus mindestens einem Metallpulver oder einem Pulver einer Metalllegierung, beschleunigt und auf die Oberfläche des Kunststoffbauteils aufgetragen wird), es kann jedoch auch derart erfolgen, dass die zuvor genannten Verfahren alternierend bzw. kombiniert angewandt werden. Z.B. kann eine erste Metallschicht mittels cold-jetting erzeugt werden, die nachfolgende oder nachfolgenden Metallschichten können dann auch mittels anderer Verfahren aufgetragen werden.

Durch das iterative Wiederholen können somit relativ dicke Metallschichten bzw. Metallstrukturen, die unmittelbar bzw. mittelbar mit dem Kunststoffbauteil verbunden sind, erzeugt werden. Hierunter fallen beispielsweise auch Gewindeeinsätze etc., mit denen eine Verschraubung des dadurch entstehenden Kunststoffbauteils stattfinden kann oder lasttragende Metallstrukturen.

Ferner ist es möglich, dass der Eintrag der Metallpartikel bzw. des Metallpulvers ganz oder teilweise in eine noch nicht ausgehärtete Kopplungsschicht aus einem der erwähnten Duroplaste erfolgt.

Das Kunststoffbauteil kann faserverstärkt, insbesondere carbonfaserverstärkt oder glasfaserverstärkt sein.

Insbesondere ist der schmelzmetallurgische Schritt so auszuführen, dass keine Zersetzung des Kunststoffbauteils und/oder der Kopplungsschicht erfolgt.

Hierzu können die jeweiligen Temperaturen bzw. Prozessparameter entsprechend angepasst werden, um eine Zersetzung des Kunststoffmaterials zu vermeiden.

Weiter ist es von Vorteil, wenn unmittelbar vor Auftrag des Pulverschicht oder des Pulverstrahls ein Erwärmen der Oberfläche des Kunststoffbauteils oder der Oberfläche der Kopplungsschicht, vorzugsweise auf eine Temperatur oberhalb der Glasübergangstemperatur, weiter bevorzugt auf eine Temperatur im Bereich der Schmelztemperatur ± 50 K erfolgt.

Das Verfahren kann so ausgeführt werden, dass eine dichte oder poröse Metallschicht erzeugt wird. Im Falle des Erzeugens einer Dichtmetallschicht kann dies beispielsweise dadurch erfolgen, dass die zugeführte Wärmemenge so eingestellt wird, dass ein vollständiges Schmelzbad entsteht, bei dem alle bzw. nahezu alle Metallpartikel aufschmelzen. Für den Fall, dass eine poröse Metallschicht erzeugt werden soll, wird das Verfahren derart ausgeführt, dass die Metallpartikel bzw. das Metallpulver nur anschmilzt und die einzelnen Pulverpartikel miteinander versintert werden.

Die insgesamt erzeugte Metallschicht kann in einer Gesamtdicke von 1 µm bis 10 cm, bevorzugt von 10 µm bis 5 cm, besonders bevorzugt von 0,1 bis 2 cm erzeugt werden.

Das erfindungsgemäße Verfahren kann beispielsweise mit Kunststoffbauteilen, ausgewählt aus der Gruppe bestehend aus Fanschaufeln, Turboladern, Lüfterrädern, Verdichterrädern, sowie Strukturteilen die teils aus Kunststoff, teils aus Metall bestehen, insbesondere Strukturteile im Schiffsbau/Yacht bau, Luftfahrt, Automobilbau oder E-Mobilität durchgeführt werden.

Insbesondere ist das Kunststoffbauteil eine Fanschaufel und die Metallschicht wird im Bereich der Vorderkante (leading edge) erzeugt.

Beispielsweise kann die Fanschaufel aus einem Carbonfaser verstärkten Kunststoff (CFRP) gebildet sein und die Metallschicht auf eine vorhandene Kopplungsschicht aufgebracht sein.

Zudem betrifft die vorliegende Erfindung ein Metallbeschichtetes Kunststoffbauteil, umfassend eine zumindest bereichsweise auf einer Oberfläche eines Kunststoffbauteils aufgebrachte unmittelbar oder mittelbar mit der Oberfläche des Kunststoffbauteils verbundenen Metallschicht, ausgewählt aus der Gruppe bestehend aus Fanschaufeln, Turboladern, Lüfterrädern, Verdichterrädern sowie Strukturteilen die teils aus Kunststoff, teils aus Metall bestehen, insbesondere Strukturteile im Schiffsbau/Yacht bau, Luftfahrt, Automobilbau oder E-Mobilität.

Bezüglich der spezifischen Details betreffend die Art bzw. Natur des Kunststoffs der Kopplungsschicht bzw. des Kunststoffbauteils sowie sonstiger Ausführungen hinsichtlich Dicke und Erzeugung der Metallschicht auf dem Kunststoffbauteil sei auf die voranstehenden Ausführungsformen verwiesen.

Sämtliche der Ausführungsformen betreffend das Verfahren gelten uneingeschränkt auch für das erfindungsgemäße metallbeschichtete Kunststoffbauteil.

Die vorliegende Erfindung wird anhand den nachfolgenden Ausführungsbeispielen näher beschrieben.

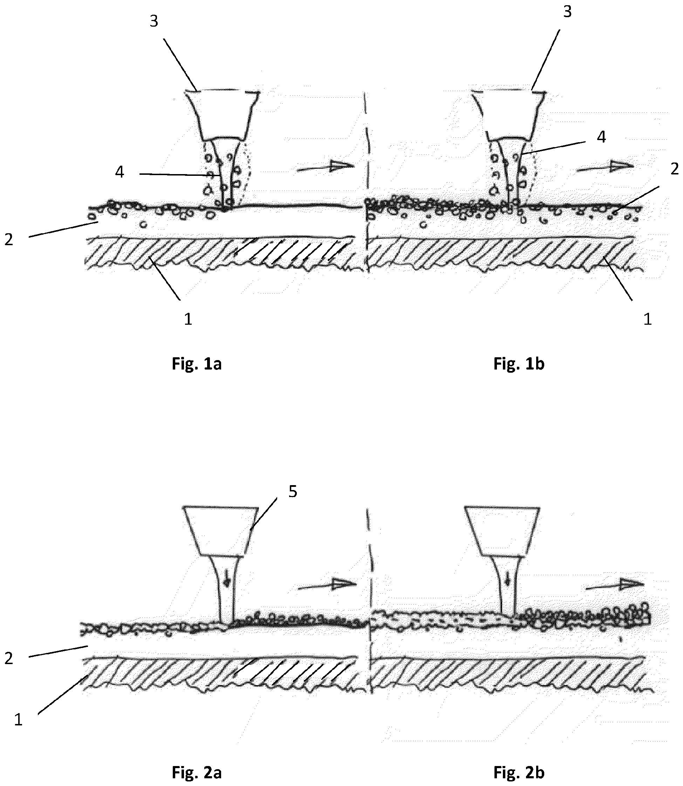

In Figur 1 ist eine erste Ausführungsform zur Durchführung des erfindungsgemäßen Verfahrens dargestellt. Auf ein Kunststoffbauteil 1, beispielsweise aus kohlenstofffaserverstärktem Kunststoff wird eine Kopplungsschicht 2 aus einem thermoplastischen Kunststoff, beispielsweise PEEK aufgebracht. Mittels eines Auftragskopfes 3 erfolgt ein Auftrag der ersten Schicht, indem, wie im gewählten Beispiel dargestellt, ein Partikelstrahl 4 eines Metallpulvers auf die Oberfläche der Kopplungsschicht 2 aufgetragen wird.

Figur 1a zeigt den Auftrag der ersten Pulverschicht auf die Kopplungsschicht 2. Die erste Schicht wird mittels einer fokussierten Wärmequelle und einer geeigneten Pulverzufuhrdüse 3 auf die Kopplungsschicht 2 auf dem Bauteil 1 aufgetragen. Die Kopplungsschicht 2 kann entfallen, sofern das Bauteil 1 aus einem beschichtungsfähigen Kunststoff besteht. Der Auftrag kann auch mittels der sog. "Cold-Jetting"-Technik erfolgen.

Der LMD Auftrag kann auch auf eine zuvor erzeugte Metallschicht die mittels Cold-Jetting hergestellt wurde erfolgen.

In Figur 1b ist der Auftrag der zweiten bzw. jeder weiteren Schicht dargestellt.

Figur 2 zeigt eine alternative Ausführungsform des erfindungsgemäßen Verfahrens. Hierbei erfolgt der Auftrag der Schicht als lose Pulverschicht (z. B. durch Rakeln). Mittels einer fokussierten Wärmequelle 5 (beispielsweise eines Lasers) wird auf der Kopplungsschicht 2 auf dem Bauteil 1 (beispielsweise aus einem kohlenstofffaserverstärkten Kunststoffbauteil) der Verbund der Partikel untereinander erzeugt, wobei der Kunststoff/Metallverbund entsteht. Die Kopplungsschicht 2 kann entfallen, wenn das Bauteil 1 aus einem beschichtungsfähigen Kunststoff besteht.

Figur 2a zeigt die Herstellung der ersten Metallschicht auf der Kopplungsschicht 2. In Figur 2b wird der Auftragsschritt, wie in Figur 2A beschrieben, wiederholt, um die Metallschicht zu verstärken.

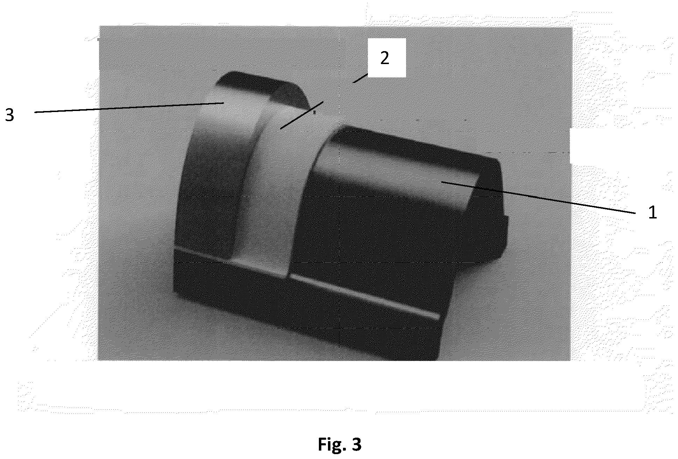

Figur 3 zeigt einen Ausschnitt aus einer Fanschaufel 6, deren prinzipieller Aufbau im Bereich der Vorderkante in Figur 3 dargestellt ist. Die Fanschaufel weist dabei einen kohlenstofffaserverstärkten Grundkörper 1 auf, auf dem im Bereich der herzustellenden Beschichtung eine Kopplungsschicht 2 aus PEEK aufgebracht ist. Mittels des erfindungsgemäßen Verfahrens kann direkt auf der PEEK-Kopplungsschicht eine Metallschicht 3 erzeugt werden, die genannten - durch iterative Anbindung des erfindungsgemäßen Verfahrens - auch eine Dicke im Millimeter- bis Zentimeterbereich aufweisen kann. Auf die im erfindungsgemäßen Verfahren beschriebene Art und Weise lassen sich somit effektiv Metallstrukturen auf Kunststoffen erzeugen, ohne dass es eines Klebevorgangs oder einer getrennten Herstellung der aufzubringenden Metallstruktur bedarf.

## Patentansprüche

1. Verfahren zur Herstellung eines Metall-Kunststoff-Verbundes, bei dem zumindest bereichsweise auf eine Oberfläche eines Kunststoffbauteils
eine Pulverschicht, umfassend oder bestehend aus mindestens einem Metallpulver oder einem Pulver einer Metalllegierung, aufgebracht und anschließend die Pulverschicht durch einen schmelzmetallurgischen oder sintermetallurgischen Schritt zu einer unmittelbar oder mittelbar mit der Oberfläche des Kunststoffbauteils verbundenen Metallschicht verarbeitet wird, oder
ein Pulverstrahl, umfassend oder bestehend aus mindestens einem Metallpulver oder einem Pulver einer Metalllegierung in den Fokus einer auf die Oberfläche des Kunststoffbauteils fokussierten Wärmequelle eingetragen wird, wobei eine unmittelbar oder mittelbar mit der Oberfläche des Kunststoffbauteils verbundenen Metallschicht erzeugt wird, oder
ein Pulverstrahl, umfassend oder bestehend aus mindestens einem Metallpulver oder einem Pulver einer Metalllegierung, beschleunigt und auf die Oberfläche des Kunststoffbauteils aufgetragen wird, so dass beim Auftreffen des Pulverstrahls eine mit der Oberfläche des Kunststoffbauteils verbundene Metallschicht erzeugt wird.

2. Verfahren nach Anspruch 1, **dadurch gekennzeichnet, dass**
der schmelzmetallurgischen Schritt ausgewählt ist aus der Gruppe bestehend aus Electron Beam Melting (EBM), Laser Powder Bed Fusion (LPBF) und Plasmaschweißen, oder
das Erzeugen der Metallschicht mittels Direct Energy Deposition (DED), z.B. mittels Laser Metal Deposition (LMD) durchgeführt wird, oder das Erzeugen der Metallschicht mittels Cold Jetting durchgeführt wird.

3. Verfahren nach einem der vorhergehenden Ansprüche, **dadurch gekennzeichnet, dass** bei einer mittelbaren verbundenen Metallschicht Kopplungsschicht
die Oberfläche des Kunststoffbauteils zumindest in dem Bereich, in dem die Pulverschicht aufgebracht wird, eine Kopplungsschicht aus einem Kunststoff aufweist oder
vor Aufbringen der Pulverschicht auf der Oberfläche des Kunststoffbauteils zumindest in dem Bereich, in dem die Pulverschicht aufgebracht wird, eine Kopplungsschicht aus einem Kunststoff, der bevorzugt ausgewählt ist aus der Gruppe bestehend aus thermoplastischen Kunststoffen, bevorzugt semikristallinen oder amorphen thermoplastischen Kunststoffen, insbesondere semikristallinen oder amorphen Polyetherketonen (PEK), z.B. Polyetheretherketon (PEEK); Polyalkylenen, z.B. Polyethylen (PE) oder Polypropylen (PP); Polyamiden (PA); Polyacetalen, z.B. Polyoxymethylen (POM); Polyacrylathen, z.B. Polymethyl(meth)acrylat (PMMA); Polyphenylensulfid (PPS); Polycarbonaten (PC); Polyestern, z.B. Polyethylenterephthalat (PET); Polyphthalamiden (PPA); Acrylnitril-Butadien-Styrol-Copolymeren (ABS); Polyvinylchlorid (PVC); Polyamidimide (PAI); Polysulfonen (PSU); Polyethersulfonen (PES) sowie Mischungen und Kombinationen hiervon, aufgebracht wird.

4. Verfahren nach einem der vorhergehenden Ansprüche, **dadurch gekennzeichnet, dass** die Kopplungsschicht
Metallpartikel und/oder Metallfasern, die im Kunststoff der Kopplungsschicht eingebettet sind, beinhaltet, wobei bevorzugt das Metall der Metallpartikel und/oder der Metallfasern aus dem gleichen Metall oder der gleichen Metalllegierung wie das Metall bzw. die Metalllegierung der Pulverschicht oder unterschiedlichen Metallen oder Metalllegierungen wie das Metall bzw. die Metalllegierung der Pulverschicht ist, und/oder
die Kopplungsschicht mittels eines Spritzverfahrens, z.B. mittels Pulverspritzens oder thermischen Spritzens aufgetragen wird, bei dem ein Pulver des Kunststoffs der Kopplungsschicht ggf. zusammen mit den Metallpartikel und/oder Metallfasern auf die Oberfläche des Kunststoffbauteils aufgesprüht wird.

5. Verfahren nach einem der vorhergehenden Ansprüche, **dadurch gekennzeichnet, dass**
im Falle des unmittelbaren Verbindens der Metallschicht mit dem Kunststoffbauteil der Kunststoff des Kunststoffbauteils ein thermoplastischer Kunststoff ist und insbesondere ausgewählt ist aus der Gruppe bestehend aus thermoplastischen Kunststoffen, bevorzugt semikristallinen oder amorphen thermoplastischen Kunststoffen, insbesondere semikristallinen oder amorphen Polyetherketonen (PEK), z.B. Polyetheretherketon (PEEK); Polyalkylenen, z.B. Polyethylen (PE) oder Polypropylen (PP); Polyamiden (PA); Polyacetalen, z.B. Polyoxymethylen (POM); Polyacrylathen, z.B. Polymethyl(meth)acrylat (PMMA); Polyphenylensulfid (PPS); Polycarbonaten (PC); Polyestern, z.B. Polyethylenterephthalat (PET); Polyphthalamiden (PPA); Acrylnitril-Butadien-Styrol-Copolymeren (ABS); Polyvinylchlorid (PVC); Polyamidimide (PAI); Polysulfonen (PSU); Polyethersulfonen (PES) sowie Mischungen und Kombinationen hiervon, oder
im Falle des mittelbaren Verbindens der Metallschicht mit dem Kunststoffbauteil der Kunststoff des Kunststoffbauteils ausgewählt ist aus der Gruppe bestehend aus den zuvor genannten thermoplastischen Kunststoffen sowie Duroplasten, insbesondere Formaldehydharzen, Epoxidharzen, Phenolharzen, Acrylatharzen; sowie Polyurethanen und Silikonharzen.

6. Verfahren nach einem der vorhergehenden Ansprüche, **dadurch gekennzeichnet, dass** die Pulverschicht neben dem mindestens einen Metallpulver oder dem Pulver einer Metalllegierung ein Kunststoffpulver und/oder Metallfasern umfasst.

7. Verfahren nach einem der vorhergehenden Ansprüche, **dadurch gekennzeichnet, dass** das Metall ausgewählt ist aus der Gruppe bestehend aus Übergangsmetallen der 3. Periode des Periodensystems, insbesondere Titan, oder Hauptgruppenmetallen, insbesondere Magnesium oder Aluminium, und die Metalllegierungen ausgewählt sind aus der Gruppe bestehend aus Legierungen von Übergangsmetallen der 3. Periode des Periodensystems, insbesondere Titanlegierungen, Stähle, Eisenlegierungen oder High-Entropy-Alloys, oder Legierungen von Hauptgruppenmetallen, insbesondere Magnesiumlegierungen oder Aluminiumlegierungen.

8. Verfahren nach einem der vorhergehenden Ansprüche, **dadurch gekennzeichnet, dass** nach Herstellen der unmittelbar oder mittelbar mit der Oberfläche des Kunststoffbauteils verbundenen Metallschicht mindestens ein weiteres Mal, z.B. 1 bis 1.000.000 Mal, bevorzugt 20 bis 10.000 Mal,
eine Pulverschicht mindestens eines Metalls oder einer Metalllegierung aufgebracht und anschließend ein schmelzmetallurgischen Schritt durchgeführt wird, oder
ein Pulverstrahl, umfassend oder bestehend aus mindestens einem Metallpulver oder einem Pulver einer Metalllegierung in den Fokus einer auf die Oberfläche der Metallschicht fokussierten Wärmequelle eingetragen wird, oder
ein Pulverstrahl, umfassend oder bestehend aus mindestens einem Metallpulver oder einem Pulver einer Metalllegierung, beschleunigt und auf die Oberfläche des Kunststoffbauteils aufgetragen wird,
wobei jeweils eine Verdickung der Metallschicht stattfindet.

9. Verfahren nach einem der vorhergehenden Ansprüche, **dadurch gekennzeichnet, dass**
der Eintrag der Metallpartikel ganz oder teilweise in eine noch nicht ausgehärtete Kopplungsschicht aus einem der erwähnten Duroplaste erfolgt und/oder
der schmelzmetallurgische Schritt so ausgeführt wird, dass keine Zersetzung des Kunststoffbauteils und/oder der Kopplungsschicht erfolgt, und/oder
unmittelbar vor Auftrag des Pulverschicht oder des Pulverstrahls ein Erwärmen der Oberfläche des Kunststoffbauteils oder der Oberfläche der Kopplungsschicht, vorzugsweise auf eine Temperatur oberhalb der Glasübergangstemperatur, weiter bevorzugt auf eine Temperatur im Bereich der Schmelztemperatur ± 50 K erfolgt.

10. Verfahren nach einem der vorhergehenden Ansprüche, **dadurch gekennzeichnet, dass** das Kunststoffbauteil faserverstärkt, insbesondere carbonfaserverstärkt oder glasfaserverstärkt ist.

11. Verfahren nach einem der vorhergehenden Ansprüche, **dadurch gekennzeichnet, dass**
eine dichte oder poröse Metallschicht erzeugt wird und/oder
die Metallschicht in einer Gesamtdicke von 1 µm bis 10 cm, bevorzugt von 10 µm bis 5 cm, besonders bevorzugt von 0,1 bis 2 cm erzeugt wird.

12. Verfahren nach einem der vorhergehenden Ansprüche, **dadurch gekennzeichnet, dass** das Kunststoffbauteil ausgewählt ist aus der Gruppe bestehend aus Fanschaufeln, Turboladern, Lüfterrädern, Verdichterrädern, sowie Strukturteilen die teils aus Kunststoff, teils aus Metall bestehen, insbesondere Strukturteile im Schiffsbau/Yachtbau, Luftfahrt, Automobilbau oder E-Mobilität.

13. Verfahren nach vorhergehendem Anspruch, **dadurch gekennzeichnet, dass** das Kunststoffbauteil eine Fanschaufel ist und die Metallschicht im Bereich der Vorderkante (leading edge) erzeugt wird, insbesondere die Fanschaufel aus einem Carbonfaser verstärkten Kunststoff (CFRP) gebildet ist und die Metallschicht auf eine vorhandene Kopplungsschicht aufgebracht wird..

14. Metallbeschichtetes Kunststoffbauteil, umfassend eine zumindest bereichsweise auf einer Oberfläche eines Kunststoffbauteils aufgebrachte unmittelbar oder mittelbar mit der Oberfläche des Kunststoffbauteils verbundenen Metallschicht, ausgewählt aus der Gruppe bestehend aus Fanschaufeln, Turboladern, Lüfterrädern, Verdichterrädern, sowie Strukturteilen die teils aus Kunststoff, teils aus Metall bestehen, insbesondere Strukturteile im Schiffsbau/Yacht bau, Luftfahrt, Automobilbau oder E-Mobilität.

15. Metallbeschichtetes Kunststoffbauteil nach vorhergehendem Anspruch, **dadurch gekennzeichnet, dass** bei einem mittelbaren Verbund der Metallschicht mit der Oberfläche des Kunststoffbauteils eine Kopplungsschicht aus einem Kunststoff zwischen der Oberfläche des Kunststoffbauteils und der Metallschicht ausgebildet ist, oder zusätzlich eine weitere Kopplungsschicht aus Metall aufgebracht mittels Cold-Jetting zwischen der Oberfläche des Kunststoffbauteils und der Metallschicht ausgebildet ist.

16. Metallbeschichtetes Kunststoffbauteil nach einem der Ansprüche 14 bis15, **dadurch gekennzeichnet, dass** das Kunststoffbauteil eine Fanschaufel ist und die Metallschicht im Bereich der Vorderkante (leading edge) aufgebracht ist, wobei insbesondere die Fanschaufel aus einem Carbonfaser verstärkten Kunststoff (CFRP) gebildet ist und die Metallschicht auf eine vorhandene Kopplungsschicht aufgebracht wird.
